# EUROPÄISCHE PATENTANMELDUNG

(11) **EP 1 464 520 A1**
(43) Veröffentlichungstag der Anmeldung: **06.10.2004**
(21) Anmeldenummer: 04450080.9
(22) Anmeldetag: 01.04.2004
(51) Int. Cl.: B60G 17/015, B61F 5/22

(54) **Niveau- und Neigungssteuerung eines Wagenkastens, mit einem durch einen Elektromotor betätigtes Getriebe.**

(30) Priorität: 01.04.2003 AT 507032003
(71) Anmelder: Siemens SGP Verkehrstechnik GmbH, 1110 Wien (AT)
(72) Erfinder: Heusgen, Dieter, A-2603 Felixdorf (AT); Swoboda, Kurt, A-1210 Wien (AT)
(74) Vertreter: Matschnig, Franz, Dipl.-Ing.

(57) **Zusammenfassung**

Eine Vorrichtung (VOR) zur Niveauregulierung eines Fahrzeuges, wobei die Vorrichtung erste Mittel (MI1) zum Erfassen des Niveaus eines Wagenkastens (WAK) und zweite mit den ersten zusammenwirkende Mittel (MI2) zur Regelung des Wagenkastenniveaus aufweist, wobei zur Einstellung des Wagenkastenniveaus mindestens em Getriebe (GET) vorgesehen ist.

## Beschreibung

Die Erfindung betrifft eine Vorrichtung zur Niveauregulierung eines Fahrzeuges, wobei die Vorrichtung erste Mittel zum Erfassen des Niveaus eines Wagenkastens und zweite mit den ersten zusammenwirkende Mittel zur Regelung des Wagenkastenniveaus aufweist.

Unter einem Wagenkasten wird in diesem Dokument nicht nur ein Wagenkasten eines Schienenfahrzeuges sondern auch die Karosserie eines Kraftfahrzeuges verstanden.

Eine Vorrichtung der eingangs genannten Art ist beispielweise aus der EP 0 663 877 B1 bekannt geworden. Die bekannte Vorrichtung weist ein hydropneumatisch geregeltes Federungs-Dämpfungssystem auf, wobei Sensoren, die sowohl das Niveau als auch die Neigung des Wagenkastens aufnehmen können, vorgesehen sind. Von den Sensoren erzeugte Signale werden einer elektronischen Regelung zugeführt. Einer Förderpumpe des hydraulischen Druckmediums ist ein weiterer Druckspeicher parallel geschaltet, die beide zusammen gegen den Druck eines hydropneumatischen Federspeichers arbeiten.

Nachteilig an dem bekannten System ist vor allem der durch die Verwendung hydraulischer Komponenten bedingte hohe Wartungsaufwand.

Es ist daher eine Aufgabe der Erfindung, ein wartungsarmes und einfach herzustellendes System zu schaffen.

Diese Aufgabe wird mit einer Vorrichtung der eingangs genannten Art erfindungsgemäß dadurch gelöst, dass zur Einstellung des Wagenkastenniveaus mindestens ein Getriebe vorgesehen ist.

Unter einem Getriebe wird hier ganz allgemein eine Vorrichtung zur Umsetzung von Drehmomenten verstanden.

Die erfindungsgemäße Lösung ermöglicht eine von hydraulischen Komponenten gänzlich unabhängige Regulierung des Wagenkastenniveaus. Somit können aufgrund des notwendigen hohen Anspruchs an die Reinheit des Hydrauliköls notwendigen häufigen Wartungsarbeiten entfallen. Auch kann es zu keinem Komplettausfall des Niveauregulierungssystems durch Undichtigkeiten des hydraulischen Systems kommen. Durch die Erfindung kann somit auch eine sehr hohe Betriebssicherheit gewährleistet werden.

In einer bevorzugten Ausführungsform der Erfindung ist das Getriebe als Spindelantrieb ausgebildet. In diesem Fall wird eine Drehbewegung in eine Schubbewegung umgewandelt, wobei sich diese Ausführungsform vor allem durch ihren geringen Platzbedarf und ihren einfachen und sicheren Betrieb auszeichnet.

Günstigerweise weisen die Mittel zum Erfassen des Niveaus des Wagenkastens mindestens einen elektronischen Niveaugeber und die Mittel zur Regelung des Wagenkastenniveaus eine elektronische Steuerschaltung zur Steuerung des Getriebes anhand von den ersten Mitteln erzeugten Signalen auf, wobei der elektronische Niveaugeber über mindestens eine elektrisch oder optisch leitende Signalübertragungsleitung mit der Steuerschaltung verbunden ist.

Vorteilhafterweise ist die elektronische Steuerschaltung programmierbar, wobei die elektronische Steuerschaltung beispielsweise ein Mikroprozessor sein kann. Dadurch lässt sich auf besonders einfache Weise eine Steuerung für das Getriebe realisieren, die auch auf unterschiedlichste Fahrtsituationen reagieren kann.

Zur Betätigung des Getriebes kann ein von der Steuerschaltung gesteuerter Elektromotor vorgesehen sein.

Das Getriebe kann zwischen einem Fahrwerk des Fahrzeuges und dem Wagenkasten angeordnet sein, wobei sich eine besonders einfach zu realisierende Ausführungsform ergibt, wenn das Getriebe Teil eines zwischen dem Fahrwerk und dem Wagenkasten angeordneten Federbeins zum Abfedern des Wagenkastens gegen das Fahrwerk ist. Unter einem Fahrwerk wird in diesem Dokument sowohl ein Drehgestell als auch ein beliebiges anderes Untergestell eines Schienenfahrzeuges, wie beispielsweise ein Losradfahrwerk, bzw. auch das Fahrwerk eines Kraftfahrzeuges wie einem PKW oder LKW verstanden.

Um eine möglichst effiziente Niveauregulierung zu gewährleisten, können mehrere Federbeine mit je einem Getriebe vorgesehen sein, wobei an jedem dieser Federbeine mindestens ein elektronischer Niveaugeber angeordnet sein kann.

Weiters kann ein Pufferspeicher zur Speicherung elektrischer Energie vorgesehen sein, über den in Bedarfsfall der Elektromotor gespeist werden kann. Durch diese Ausführungsform lassen sich zum einen hohe Spitzenbelastungen der Bordnetzversorgung vermeiden, zum anderen lässt sich mit dem Pufferspeicher auch bei einem Ausfall der Bordnetzversorgung die Betätigbarkeit des Elektromotors sicherstellen, wie im Folgenden noch näher beschrieben.

Vorteilhafterweise kann der Pufferspeicher als Kombination von mindestens einer Batterie und mindestens einem Kondensator ausgebildet sein.

Weiters kann die Steuerung dazu eingerichtet sein, den Elektromotor langsam anlaufen zu lassen.

Die erfindungsgemäße Vorrichtung eignet sich insbesondere zum Einbau in ein Schienenfahrzeug, bzw. dazu Nick und Wankbewegungen eines Wagenkastens eines Fahrzeuges auszugleichen.

Die Erfindung samt weiterer Vorteile wird im Folgenden anhand einiger nicht einschränkender Ausführungsbeispiele näher erläutert, welche in der Zeichnung dargestellt sind. In dieser zeigen schematisch:
Fig. 1 ein erfindungsgemäße Vorrichtung in einem eingebauten Zustand;
Fig. 2 ein Blockschaltbild einer erfindungsgemäßen Vorrichtung und
Fig. 3 ein Getriebe in Form eines Spindelantriebs einer erfindungsgemäßen Vorrichtung im näheren Detail.

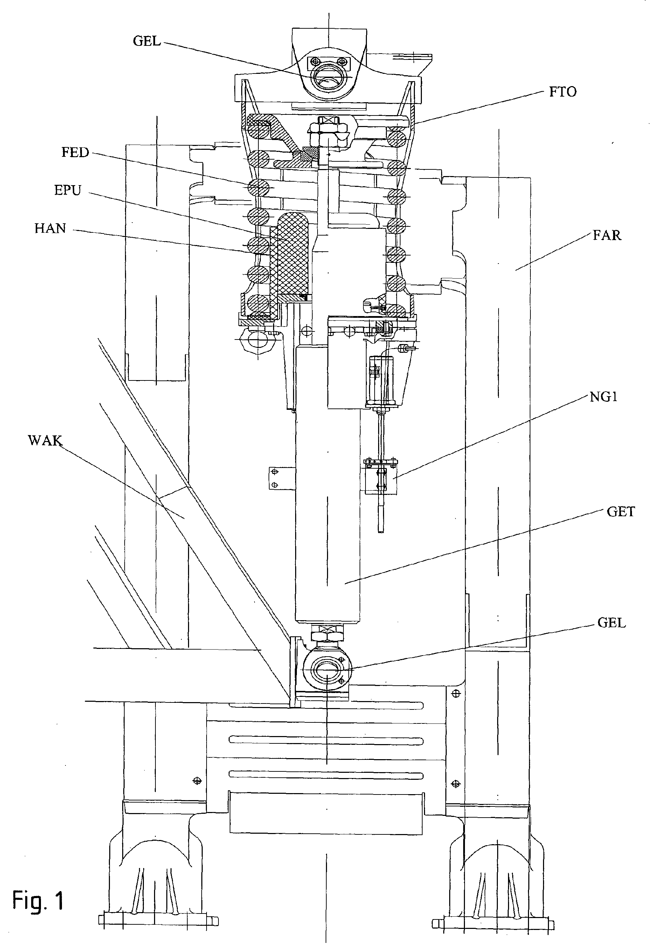

Gemäß Fig. 1 weist eine erfindungsgemäße Vorrichtung VOR zur Regelung bzw. Steuerung des Niveaus bzw. der Neigung eines Wagenkastens WAK eines Fahrzeuges, insbesondere eines Schienenfahrzeuges, ein elektromechanisch geregeltes Feder-Dämpfungssystem FEB auf. Zur Verstellung des Wagenkastenniveaus ist hierbei ein Getriebe GET vorgesehen, über welches der Abstand zwischen dem Wagenkasten WAK und einem Fahrwerk FAR verändert werden kann.

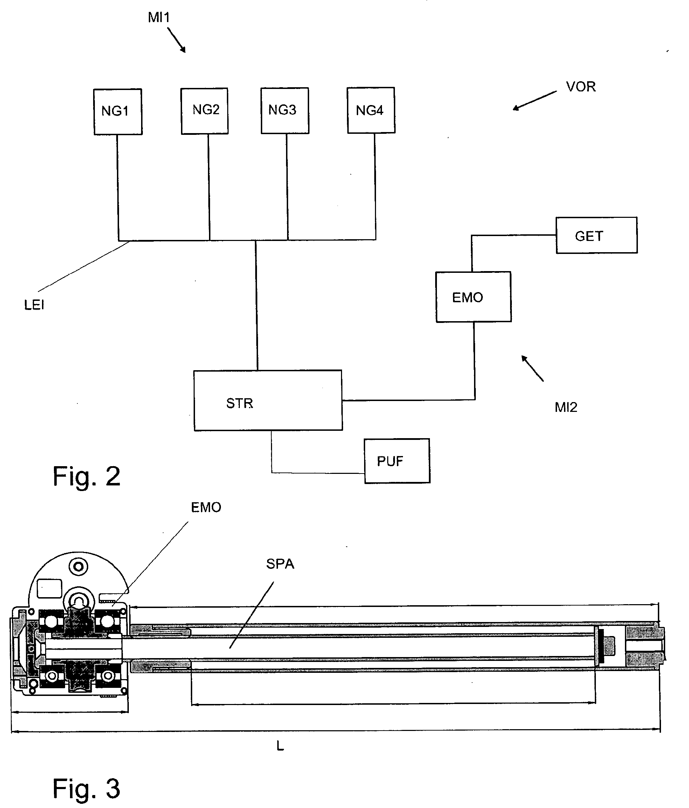

Weiters umfasst die Vorrichtung Mittel MI1, die es gestatten, sowohl das Niveau als auch die Neigung des Wagenkastens WAK zu ermitteln (Fig. 2). Diese Mittel MI1 können beispielsweise neben mindestens einem elektronischen Niveaugeber NG1, NG2, NG3, NG4 Signalleitungen oder Funkmodule zur Signalübertragung an eine Steuerung STR umfassen. Derartige Niveaugeber bzw. Sensoren sind dem Fachmann in großer Zahl bekannt und sollen daher an dieser Stelle nicht weiter erläutert werden. So kann der Niveaugeber beispielsweise in Form eines optoelektronischen, magnetischen oder induktiven Wegaufnehmers ausgebildet sein, wobei das aktuelle Niveau des Wagenkastens als Abweichung von einer vordefinierbaren Nullpunktslage erfasst werden kann.

Gemäß Fig. 2 können die Signale der Niveaugeber NG1, NG2, NG3, NG4 an eine elektronische Steuerschaltung STR, welche als programmierbare Schaltung, beispielsweise in Form eines Mikroprozessors, ausgebildet sein kann, über elektrisch oder optisch leitende Signal-übertragungsleitungen weitergeleitet werden. Natürlich wäre es auch denkbar, dass die Signalübertragung von einem Niveaugeber NG1, NG2, NG3, NG4 an die Steuerelektronik STR auch per Funk, beispielsweise über Bluetooth, erfolgt.

Die Mittel MI2 zur Steuerung des Wagenkastenniveaus umfassen in der Ausführungsform nach Fig. 2 neben einer Steuerelektronik STR einen Elektromotor EMO und ein Getriebe GET. Die Steuerelektronik STR ist mit dem Elektromotor EMO verbunden, über welchen das Getriebe GET betätigt werden kann, um das Niveau des Wagenkastens WAK auf ein Sollniveau hin zu regeln und Nick und Wankbewegungen des Wagenkastens WAK entgegenzuwirken.

In einer sehr einfachen Ausführungsform der Erfindung kann bei Unterschreiten eines unteren Niveaus durch den Wagenkasten ein Schalter betätigt werden, der den Elektromotor EMO einschaltet und den Spindelantrieb in Gang setzt. Bei Erreichen der Sollhöhe kann der Elektromotor EMO mittels einer Schalterfunktion wieder von der Spannungsquelle wieder getrennt werden. Das gleiche Regelungsprinzip ist auch bei einem Überschreiten einer maximal zulässigen Niveauhöhe des Wagenkastens anwendbar. In der soeben beschriebenen Ausführungsform der Erfindung ist keine eigene Steuerschaltung erforderlich.

Weiters kann ein Pufferspeicher PUF zur Speicherung elektrischer Energie vorgesehen sein. Die Speicherung elektrischer Energie in diesem Pufferspeicher kann beispielsweise auf kapazitiver Basis z.B. Kondensatoren oder in einer Batterie erfolgen. In einer hochwertigen Ausführungsform ist der Pufferspeicher als Kombination von Batterie und Kondensatoren ausgebildet. Dies gestattet eine optimale Anpassung bezüglich Energiespeicherung und Spitzenbelastung.

Aus dem Pufferspeicher PUF kann bei einem Anlaufen des Motors elektrische Energie zugespeist werden, wodurch hohe Spitzenbelastungen der Bordnetzversorgung bei einem Betätigen des Motors vermieden werden können.

Ein weiterer Vorteil des Pufferspeichers besteht neben der in Bezug auf die Bordnetzversorgung rückwirkungsfreien Stromzuschaltung darin, dass auch bei einem Ausfall des Bordnetzes eine Betätigung des Elektromotors EMO möglich ist.

Das Bordnetz kann sowohl als Gleichstromquelle z.B. in Form eines Batterieladegerätes und einer Batterie als auch als Drehstromversorgung z.B. in Form eines statischen Umformers oder eines Generators ausgebildet sein. Alternativ hierzu kann die Stromversorgung des Elektromotors auch über die fahrzeugexterne Fahrleitung erfolgen, wodurch eine vollständige Entlastung des Bordnetzes erzielt werden kann. Auch in dem zuletzt genannten Fall kann mittels des Pufferspeichers PUF die Betriebssicherheit erhöht werden, da mit der in dem Pufferspeicher enthaltenen elektrischen Energie das Getriebe GET bzw. der Spindelantrieb selbst bei einem Stromausfall betätigt werden kann.

Durch spezielle Ausführung der Steuerelektronik ("Sanftanlauf des Elektromotors") können die Spitzenbelastungen des Bordnetzes und /oder des Pufferspeichers ebenfalls verringert werden. Dies erhöht auch die Qualität der Niveauregelung.

In dem vorliegenden Ausführungsbeispiel gemäß Fig. 3 ist das Getriebe GET als Spindelantrieb SPA ausgebildet. Vorzugsweise ist der Spindelantrieb SPA selbsthemmend ausgeführt, wodurch sich die Betriebssicherheit der erfindungsgemäßen Vorrichtung VOR weiter erhöhen lässt. Der Energiebedarf wird ebenfalls minimiert. Die Selbsthemmung des Spindelantriebes kann beispielsweise durch eine Bremse für die Spindel SPI aber auch durch eine selbsthemmende Ausbildung der Spindel SPI selbst bewirkt sein. Insbesondere kann die Spindel SPI ein selbsthemmendes Gewinde aufweisen.

Anhand von den von den Sensoren NG1, NG2, NG3, NG4 erzeugten Signalen steuert die Steuerelektronik STR über den Elektromotor EMO die Längsausdehnung L des Spindelantriebes SPA.

Der in der vorliegenden Erfindung beschrittene Lösungsweg besteht somit aus mehreren Baugruppen, wie beispielsweise einem Federbein FEB mit integriertem Getriebe GET bzw. Spindelantrieb SPA und der Ansteuerelektronik STR. Ein Stoßdämpfer wird vorzugsweise außerhalb des Federbeins FEB montiert. Das Federbein FEB samt Ansteuerelektronik STR erfüllt vorzugsweise die Funktion der Abfederung des Wagenkastens WAK.

Die Dämpfung der Federbewegung kann innerhalb oder auch außerhalb des in Fig. 1 dargestellten Federbeins FEB erfolgen. Das Federbein FEB ist zwischen einem Fahrwerk FAR, beispielsweise einem Drehgestell bzw. (Portal)-Fahrwerk, und dem Wagenkasten WAK, beispielsweise über Gelenklager GEL befestigt. In einer speziellen Ausführungsform hängt der Wagenkasten WAK am Fahrwerk (_{"}Federpendel"). Bei einer Federbewegung verändert sich die Länge der mechanischen Feder FED, beispielsweise einer Schraubenfeder, die in einem Federtopf FTO gelagert ist. Weiters können in dem Federtopf FTO ein Elastomerpuffer EPU sowie ein Hartanschlag HAN vorgesehen sein.

Pro Federbein FEB kann ein Niveaugeber NG1, NG2, NG3, NG4 bzw. Neigungssensor vorgesehen sein. Der Niveaugeber NG1, NG2, NG3, NG4 bzw. Neigungssensor meldet die Höhenlage bzw. Neigung des Wagenkasten WAK an die Ansteuerelektronik STR. Diese steuert bei zu großer Abweichung von einem Sollniveau den Spindelantrieb SPA so an, dass die Abweichung wieder in ein frei parametrisierbares Toleranzfeld um den Sollwert zu liegen kommt. Das Gesamtsystem bildet somit einen Regelkreis, dessen Einstellungen an die Forderungen des Gesamtfahrzeuges angepasst werden können.

In einem Fahrzeug kommen gewöhnlich mehrere oben genannte Regelkreise zum Einsatz. Diese Regelkreise werden sinnvollerweise steuerungsmäßig zusammengeführt, sodass das Fahrzeugniveau von einer zentralen Stelle bzw. Steuerschaltung beliebig eingestellt werden kann. Somit sind gezielte Regeleingriffe an frei wählbaren Fahrzeugteilen möglich. Dies kann zusätzlich zum Lastausgleich zu Änderungen des Fahrzeugniveaus und zur Berücksichtigung unterschiedlicher Raddurchmesser verwendet werden.

Während der Fahrt sind sowohl eine aktive Ausregelung von Nickbewegungen aufgrund hoher Beschleunigungen bzw. Verzögerungen in Längsrichtung als auch von Querneigungen infolge Zentrifugalkraft möglich. Das Regelungssystem arbeitet aufgrund der hohen Anforderungen bei Änderung der Beladung z.B. durch Fahrgastwechsel vorzugsweise im Stillstand. Entsprechend dieser Regelungslogik wird die Energiemenge minimiert. Im Normalfall kann die Versorgung aus der Bordnetzversorgung erfolgen. Die eventuell fallweise im Stillstand sehr kurzzeitig aus dem Pufferspeicher, beispielsweise einer Batterie, entnommene Spitzenleistung kann ohne Überdimensionierung der Bordnetzversorgung gewährleistet werden, wobei der Pufferspeicher während der Fahrt wieder nachgeladen werden kann.

Der Spindelantrieb kann dauergeschmiert und wartungsfrei ausgeführt sein. Die Dimensionierung der Spindel richtet sich nach den Intervallen für größere Wartungen. Somit ist durch die erfindungsgemäße Vorrichtung ein geringer Wartungsaufwand gewährleistet.

Ein weiterer Vorteil der Erfindung besteht darin, dass durch die stufenlose Verstellbarkeit des Getriebes bzw. des Spindelantriebs unterschiedliche Raddurchmesser ausgeregelt werden können, sowie auch eine Anpassung an ein Sommer bzw. Winterniveau erfolgen kann.

## Patentansprüche

1. Vorrichtung (VOR) zur Niveauregulierung eines Fahrzeuges, wobei die Vorrichtung erste Mittel (MI1) zum Erfassen des Niveaus eines Wagenkastens (WAK) und zweite mit den ersten zusammenwirkende Mittel (MI2) zur Regelung des Wagenkastenniveaus aufweist, **dadurch gekennzeichnet, dass** zur Einstellung des Wagenkastenniveaus mindestens ein Getriebe (GET) vorgesehen ist.

2. Vorrichtung nach Anspruch 1, **dadurch gekennzeichnet, dass** das Getriebe (GET) einen Spindelantrieb (SPA) aufweist.

3. Vorrichtung nach Anspruch 1 oder 2, **dadurch gekennzeichnet, dass** die Mittel zum Erfassen des Niveaus des Wagenkastens mindestens einen elektronischen Niveaugeber (NG1, NG2, NG3, NG4) aufweisen.

4. Vorrichtung nach einem der Ansprüche 1 bis 3, **dadurch gekennzeichnet, dass** die Mittel (MI2) zur Regelung des Wagenkastenniveaus eine elektronische Steuerschaltung (STR) zur Steuerung des Getriebes (GET) anhand von den ersten Mitteln erzeugten Signalen aufweisen.

5. Vorrichtung nach einem der Ansprüche 3 oder 4, **dadurch gekennzeichnet, dass** , der mindestens eine elektronische Niveaugeber (NG1, NG2, NG3, NG4) über mindestens eine elektrisch oder optisch leitende Signalübertragungsleitung mit der Steuerschaltung (STR) verbunden ist.

6. Vorrichtung nach Anspruch 4 oder 5, **dadurch gekennzeichnet, dass** die elektronische Steuerschaltung (STR) programmierbar ist.

7. Vorrichtung nach einem der Ansprüche 1 bis 6, **dadurch gekennzeichnet, dass** die elektronische Steuerschaltung (STR) ein Mikroprozessor ist.

8. Vorrichtung nach einem der Ansprüche 1 bis 7, **dadurch gekennzeichnet, dass** zur Betätigung des Getriebes (GET) ein Elektromotor (EMO) vorgesehen ist.

9. Vorrichtung nach Anspruch 8, **dadurch gekennzeichnet, dass** der Elektromotor (EMO) von der Steuerschaltung (STR) gesteuert ist.

10. Vorrichtung nach einem der Ansprüche 1 bis 9, **dadurch gekennzeichnet, dass** das Getriebe (GET) zwischen einem Fahrwerk (FAR) des Fahrzeuges und dem Wagenkasten (WAK) angeordnet ist.

11. Vorrichtung nach Anspruch 10, **dadurch gekennzeichnet, dass** das Getriebe (GET) Teil eines zwischen dem Fahrwerk (FAR) und dem Wagenkasten (WAK) angeordneten Federbeins (FEB) zum Abfedern des Wagenkastens (WAK) gegen das Fahrwerk (FAR) ist.

12. Vorrichtung nach Anspruch 11, **dadurch gekennzeichnet, dass** mehrere Federbeine (FEB) mit je einem Getriebe (GET) vorgesehen sind, wobei an jedem dieser Federbeine (FEB) mindestens ein elektronischer Niveaugeber (NG1, NG2) angeordnet ist.

13. Vorrichtung nach einem der Ansprüche 8 bis 12, **dadurch gekennzeichnet, dass** ein Pufferspeicher (PUF) zur Speicherung elektrischer Energie vorgesehen ist, über den in Bedarfsfall der Elektromotor (EMO) gespeist werden kann.

14. Vorrichtung nach Anspruch 13, **dadurch gekennzeichnet, dass** der Pufferspeicher (PUF) als Kombination von mindestens einer Batterie und mindestens einem Kondensator ausgebildet ist.

15. Vorrichtung nach einem der Ansprüche 6 bis 14, **dadurch gekennzeichnet, dass** die Steuerung (STR) dazu eingerichtet ist, den Elektromotor (EMO) langsam anlaufen zu lassen.

16. Fahrzeug mit einer Vorrichtung nach einem der Ansprüche 1 bis 15.

17. Fahrzeug nach Anspruch 16, **dadurch gekennzeichnet, dass** es ein Schienenfahrzeug ist.

18. Verwendung einer Vorrichtung nach einem der Ansprüche 1 bis 14 um Nick und Wankbewegungen eines Wagenkastens (WAK) eines Fahrzeuges auszugleichen.
